**Europäisches Patentamt**

**European Patent Office**

**Office européen des brevets**

(19)

(11) **EP 1 367 741 A2**

(12) **EUROPEAN PATENT APPLICATION**

(43) Date of publication:
**03.12.2003 Bulletin 2003/49**

(51) Int Cl.⁷: **H04B 7/10**

(21) Application number: **03101442.6**

(22) Date of filing: **21.05.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **28.05.2002 FI 20021000**

(71) Applicant: **Nokia Corporation
02150 Espoo (FI)**

(72) Inventor: **Hämäläinen, Jyri
90160, Oulu (FI)**

(74) Representative: **Antila, Harri Jukka Tapani
Kolster Oy Ab,
P.O. Box 148,
Iso Roobertinkatu 23
00121 Helsinki (FI)**

(54) **Method of using pilots in radio system and radio system**

(57)      The invention relates to a method and a radio system, which employ at least two pilots polarized with pre-known polarizations that differ from one another. The method performs polarization adaptation between two transceivers, on the basis of which a pilot to be employed is selected.

$$F'(F'_V, F'_H, \sigma)$$

$$E'(E'_V, E'_H, \delta')$$

$$E(E_V, E_H, \delta)$$

$$F(F_V, F_H, \sigma)$$

520    V

$h_{VV}$

570    V

$u_V$

$h_{VH}$

$u_V$

580

$u_H$

522

$u_H$

H

$h_{HV}$

572

H

590

$h_{HH}$

500

530

550

**Fig. 5**

EP 1 367 741 A2

**Description**

FIELD

The invention relates to a method and a radio system implementing the method for transmitting and receiving pilots.

BACKGROUND

It is known that a transmitted signal is exposed to a polarization response of a radio path, which may appear as fading, reflecting, delay and echo of different polarization directions of an electromagnetic wave associated with the radio signal. In that case, for instance, any one of the polarization components of the electromagnetic wave associated with the radio signal can fade almost completely or change its direction, which may considerably restrict the performance of the radio system. In particular, the radio path polarization response may cause trouble as terminal devices perform channel estimation by means of pilots transmitted from a base station.
In prior art solutions a base station transmits pilots to the coverage area of a cell in a predetermined polarization direction, which is defined, for instance, on the basis of field measurements carried out when setting up a radio system or the known polarizing properties of the radio path.
Drawbacks of the prior art solutions include poor dynamics of a base station for changes in the radio path polarization response and for changes in the terminal device polarization directions as pilots are transmitted to the base station area, which makes channel estimation of the terminal devices difficult.

BRIEF DESCRIPTION

It is an object of the invention to provide an improved method and a radio system implementing the method, in which a polarization response of a radio path can be taken into account. This is achieved by a method for using pilots in a radio system, in which method a first transceiver transmits pilots that are received in a second transceiver. The method is characterized by the radio system employing at least two pilots, each polarized by a pre-known polarization that differs from the other ones; transmitting and receiving at least one signal between the first transceiver and the second transceiver; determining a polarization estimate of said signal; and selecting a pilot to be employed from the at least two pilots polarized by the pre-known polarization that differs from the other ones on the basis of the determined polarization estimate.
The invention relates to a radio system implementing the method. The radio system of the invention comprises a first transceiver for transmitting pilots; and a second transceiver for receiving pilots. The radio system of the invention is characterized by employing at least two pilots between the first transceiver and the second transceiver, each of the pilots being polarized by a pre-known polarization that differs from the other ones; transmitting and receiving at least one signal between the first transceiver and the second transceiver; the receiving transceiver being arranged to determine a polarization estimate of said signal; and the radio system is arranged to select a pilot to be employed from the at least two pilots polarized by the pre-known polarization that differs from the other ones on the basis of the determined polarization estimate.
The preferred embodiments of the invention are disclosed in the dependent claims.
The invention is based on the idea that by performing a polarization adaptation between transceivers, such as base stations and terminal devices, of a radio system, it is possible to allocate pilot signal power to the polarization required by the radio path and possibly by the mutual position of the transceivers.
Several advantages are achieved by the method and the radio system of the invention. The polarization adaptation of the transceivers improves pilot quality and enhances channel estimation performed on the pilot, which in turn improves the performance of the radio system. One additional advantage is that the invention enables the implementation of the method as a software application and the use of radio-system-standard pilots in channel estimation.

LIST OF DRAWINGS

In the following the invention will be described in connection with preferred embodiments, with reference to the attached drawings, wherein

Figure 1 is a simplified block diagram of a telecommunications system;
Figure 2 is a second simplified block diagram of a telecommunications system;
Figure 3 is a simplified block diagram of a terminal device;

Figure 4 shows radiation patterns used in a radio system, and

Figure 5 is a third simplified block diagram of a telecommunications system.

DESCRIPTION OF THE EMBODIMENTS

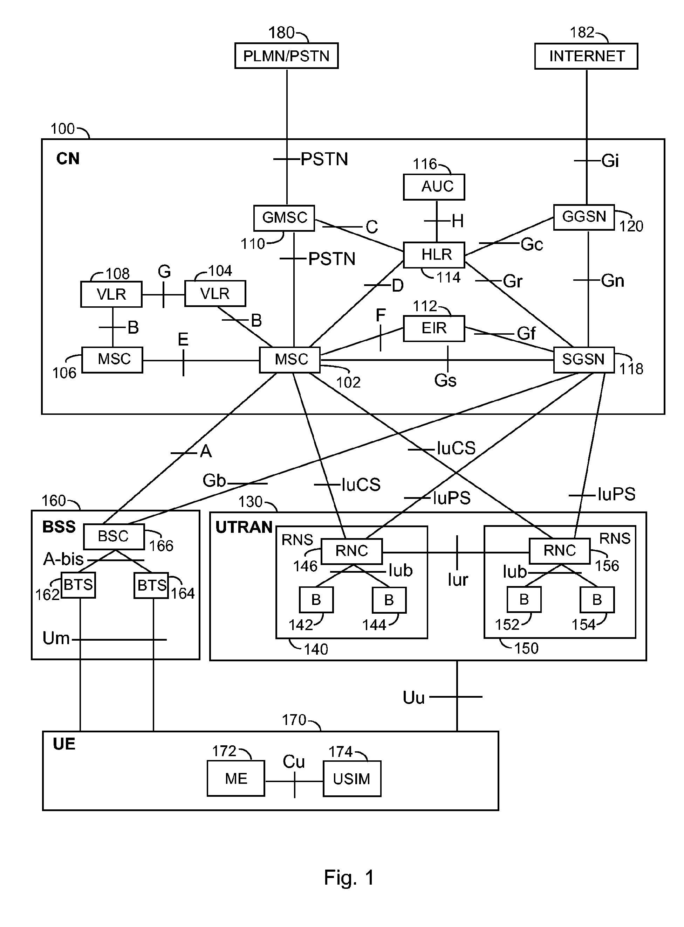

Because the invention is suitable for use in inter-generation radio systems, the embodiments are described in a radio system illustrated in Figure 1, which comprises network elements of different generations side by side. In the description, the 2G radio system is represented by the GSM (Global System for Mobile Communications), for instance. The 2.5 generation is represented by the GPRS (General Packet Radio System), for instance. The 3G radio system is represented by a system utilizing the 3G EDGE (Enhanced Data Rates for Global Evolution) technology based on the GSM system, and systems known at least under names IMT-2000 (International Mobile Telecommunications 2000) and UMTS (Universal Mobile Telecommunications System). However, the embodiments are not restricted to these systems given as examples, but a person skilled in the art can apply the teachings to other radio systems with corresponding characteristics.

Figure 1 is a simplified block diagram that illustrates, on network element level, the main parts of a radio system and the interfaces between them. The structure and operations of the network elements are not described in greater detail, because they are commonly known.

The main parts of the radio system include a core network (CN) 100, a radio access network 130 and user equipment (UE) 170. The radio access network (UMTS Terrestrial Radio Access Network, UTRAN) 130 belongs to the third generation and is implemented by wideband code division multiple access (WCDMA) technology. In addition, Figure 1 shows a base station system 160, which is implemented by time division multiple access (TDMA) technology.

In general, it is possible to define that a radio system consists of one or more user equipments, also known as subscriber terminals and mobile stations, for instance, and of a network part, which comprises all the fixed infrastructure of the radio system, i.e. a core network, a radio access network and a base station system.

The structure of the core network 100 corresponds to that of the GSM and GPRS systems combined. The GSM network elements are responsible for implementing circuit-switched connections and the GPRS network elements for implementing packet-switched connections. Some of the network elements are included in both systems, however.

A mobile services switching centre (MSC) 102 is the centre of the core network 100 on the circuit-switched side. The same mobile services switching centre 102 can be used for serving the connections of both the radio access network 130 and the base station system 160. The functions of the mobile services switching centre 102 include e.g. switching, paging, location registration, handover management, collection of subscriber billing information, encryption parameter management, frequency allocation management and echo cancellation.

The number of the mobile services switching centres 102 may vary: a minor network operator may have only one mobile services switching centre 102, but large core networks 100 may have several. Figure 1 illustrates a second mobile services switching centre 106, but its connections to other network elements are not shown for the sake of clarity in Figure 1.

Large core networks 100 may comprise a separate gateway mobile services switching centre (GMSC) 110, which takes care of the circuit-switched connections between the core network 100 and external networks 180. The gateway mobile services switching centre 110 is located between the mobile services switching centres 102, 106 and the external networks 180. The external network 180 may be a public mobile network (Public Land Mobile Network, PLMN) or a public switched telephone network (PSTN).

A home location register (HLR) 114 includes a permanent subscriber register, i.e. the following data, for instance: an international mobile subscriber identity (IMSI), a mobile subscriber ISDN number (MSISDN), an authentication key, and if the radio system supports the GPRS, a PDP (Packet Data Protocol) address.

A visitor location register (VLR) 104 includes roaming information on user equipments 170 within the area of mobile services switching centre 102. The visitor location register 104 includes basically the same information as the home location register 114, but said information resides in the visitor location register 104 only temporarily.

An equipment identity register (EIR) 112 includes the international mobile equipment identities (IMEI) of the user equipments 170 employed in the radio system and a so-called white list, as well as a black list and a grey list, if any.

An authentication centre (AuC) 116 is always located in the same place physically as the home location register 114, and it includes a subscriber authentication key $K_i$ and a corresponding IMSI.

The network elements shown in Figure 1 are operational wholes, whose physical implementation may vary. Generally, the mobile services switching centre 102 and the visitor location register 104 form one physical device, and the home location register 114, the equipment identity register 112 and the authentication centre 116 form another physical device.

A serving GPRS support node (SGSN) 118 is the centre of the core network 100 on the packet-switched side. The main function of the serving GPRS support node 118 is to transmit packets to and receive them from a user equipment 170 supporting packet-switched transmission by utilizing the radio access network 130 or the base station system 160. The serving GPRS support node 118 includes subscriber information and location information about the user equipment 170.

A gateway GPRS support node (GGSN) 120 is the packet-switched-side counterpart of the gateway mobile services switching centre 110 of the circuit-switched side, however, with the one difference that the gateway GPRS support node 120 has to be able to route also outgoing traffic from the core network 100 to the external networks 182, whereas the gateway mobile services switching centre 110 routes the incoming traffic only. In our example, the Internet represents external networks 182.

A base station system 160 consists of a base station controller (BSC) 166 and base transceiver stations (BTS) 162, 164. The base station controller 166 controls the base station 162, 164. In principle, the aim is that the devices implementing the radio path and the functions associated therewith are located in the base station 162, 164, and the control devices are located in the base station controller 166.

The base station controller 166 takes care of the following tasks, for instance: radio resources management of the base station 162, 164, intercell handovers, frequency management, i.e. frequency allocation to the base stations 162, 164, management of frequency hopping sequences, time delay measurement on the uplink, implementation of operation and maintenance interface and power control management.

The base station 162, 164 comprises at least one transceiver, which implements one carrier, i.e. eight time slots, in other words eight physical channels. Typically one base station 162, 164 serves one cell, but a solution, in which one base station 162, 164 serves a plurality of sectorized cells, is also possible. The cell diameter may vary from a few metres to tens of kilometres. It is regarded that the base station 162, 164 also comprises a transcoder, which performs conversion between the different speech encoding formats used in the radio system and in the public switched telephone network. In practice, the transcoder is generally physically located in the mobile services switching centre 102, however. The base station 162,164 is responsible, for instance, for the following functions: calculation of timing advance (TA), uplink measurements, channel coding, encryption, decryption and frequency hopping.

The radio access network 130 consists of radio network subsystems (RNS) 140, 150. Each radio network subsystem 140, 150 consists of radio network controllers (RNC) 146, 156, and B nodes 142, 144, 152, 154. The B node is rather an abstract concept, and therefore the term base station is often used instead.

The operation of the radio network controller 146, 156 corresponds roughly to that of the base station controller 166 of the GSM system and the B node 142, 144, 152, 154 corresponds to the base station 162, 164 of the GSM system. There are also solutions, in which the same device operates both as a base station and as a B node, i.e. said device can implement both a TDMA radio interface and a WCDMA radio interface at the same time.

The user equipment 170 consists of two parts: mobile equipment (ME) 172 and UMTS subscriber identity module (USIM) 174. Naturally, the GSM system employs a subscriber identity module of its own. The user equipment 170 includes at least one transceiver, by which a radio connection to the radio access network 130 or to the base station system 160 is implemented. The user equipment 170 may include at least two different subscriber identity modules. In addition, the user equipment 170 includes an antenna, a user interface and a battery. At present, there is a variety of user equipment 170, for instance, vehicle-mounted and portable ones.

USIM 174 includes user-related data and particularly data related to information security, such as an encryption algorithm.

Finally, the interfaces between the different network elements shown in Figure are set forth in Table 1. The most important interfaces in the UMTS are the lu interface between the core network and the radio access network, which is divided into a circuit-switched-side interface luCS (CS = Circuit Switched) and a packet-switched-side interface luPS (PS = Packet Switched), and the Uu interface between the radio access network and the user equipment. The most important interfaces in the GSM are the A interface between the base station controller and the mobile services switching centre, the Gb interface between the base station controller and the serving support node, and the Um interface between the base station and the user equipment. The interface determines by what sort of messages the different network elements can communicate. The objective is to achieve a radio system, in which the network elements of various manufacturers are able to cooperate well enough to form a working radio system. In practice, however, some of the interfaces are manufacturer-dependent.

| Interface | between network elements |
|---|---|
| Uu | UE-UTRAN |
| lu | UTRAN-CN |
| luCS | UTRAN-MSC |
| luPS | UTRAN-SGSN |
| Cu | ME-USIM |

(continued)

| Interface | between network elements |
|---|---|
| lur | RNC-RNC |
| lub | RNC-B |
| A | BSS-MSC |
| Gb | BSC-SGSN |
| A-bis | BSC-BTS |
| Um | BTS-UE |
| B | MSC-VLR |
| E | MSC-MSC |
| D | MSC-HLR |
| F | MSC-EIR |
| Gs | MSC-SGSN |
| PSTN | MSC-GMSC |
| PSTN | GMSC-PLMN/PSTN |
| G | VLR-VLR |
| H | HLR-AUC |
| Gc | HLR-GGSN |
| Gr | HLR-SGSN |
| Gf | EIR-SGSN |
| Gn | SGSN-GGSN |
| Gi | GGSN-INTERNET |
| Table 1 | |

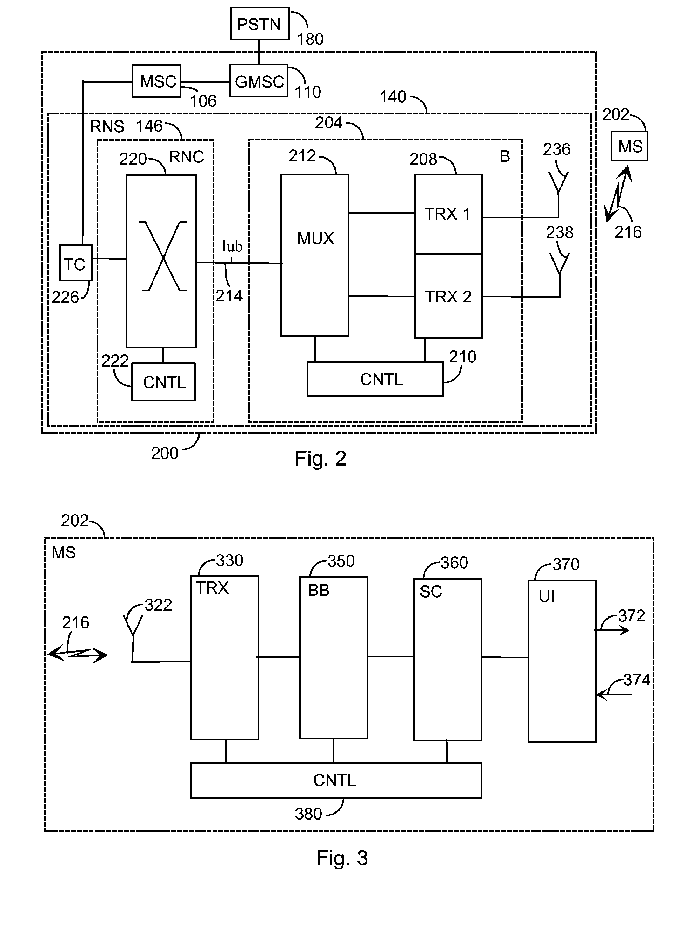

Figure 1 shows rather a general description, so Figure 2 gives a more detailed example of a cellular radio system. Figure 2 only shows the most essential blocks, but it is apparent to a person skilled in the art that a conventional cellular radio network also comprises other functions and structures, which need not be described in greater detail herein. The details of the cellular radio system may deviate from those presented in Figure 2, but they are not relevant to the invention.

Figure 2 shows a mobile services switching centre 106, a gateway mobile services switching centre 110, which takes care of the mobile system connections to the outside world, in this case to the public switched telephone network 180, and a network part 200 and terminal devices 202.

Typically, the cellular radio network comprises a fixed network infrastructure, i.e. a network part 200 and terminal devices 202, which can be fixedly located, vehicle-mounted or portable terminals, such as mobile stations or laptop computers that allow communication to the radio telecommunication system. The network part 200 comprises base stations 204. The base station corresponds to the B node of the previous figure. A plurality of base stations 204 are, in turn, controlled in a centralized manner by a radio network controller 146, which communicates therewith and comprises a group switching field 220 and a control unit 222. The group switching field 220 is used for switching speech and data and for connecting signalling circuits. The control unit 222, in turn, performs call control, mobility management, collection of statistics, signalling, and resource control and management.

The radio network subsystem 140 comprised by the base station 204 and the radio network controller 146 also includes a transcoder 226, which converts the different digital speech coding formats used between the public switched telephone network and the radio telephone network to be compatible with one another, for instance, from the fixed network format into another format of the cellular radio network, and vice versa. The transcoder 226 is generally located as close as possible to the mobile services switching centre 106, because the speech can then be transmitted in the cellular radio network format between the transcoder 226 and the radio network controller 146, which saves transmission capacity.

The base station 204 also comprises a multiplexer unit 212, a transceiver unit 208 and a control unit 210. The multiplexer 212 places the traffic and control channels used by the transceiver unit 208 on one transmission link 214. The transmission link 214 forms an interface lub. In addition, the multiplexer unit 212 performs error correction operations and possibly interleaving and deinterleaving of bits. In one polarization adaptation embodiment of the claimed solution, transmission weights for the transmitted signals are set in the multiplexer 212. There is a limited number of different possible transmission weights and at least one pilot is transmitted with each transmission weight. User-specific transmission weights are selected from the same transmission weight set on the basis of a measured polarization.

The control unit 210 controls the transceiver unit 208 and the operation of the multiplexer 212. For instance, the control unit 210 determines the weights and the phases, with which the transceivers 208 supply signals to antennae 236, 238, and with which weights radio signals arriving in the antennae 236, 238 are amplified. In addition, the control unit 210 calibrates the antennae 236, 238, which comprises measurement of the antenna signals 236, 238 and optional calibration weighting. Said measurement determines the weightings of the antennae 236, 238, which in turn determine the polarization of the signals from the antennae 236, 238. The calibration weighting permits correction of possible weight distortions produced in the transceiver unit 208, which distortions typically result from the components of the transceiver unit 208 being non-ideal.

The base station transceiver unit 208 comprises at least two input lines, which consist, for instance, of frequency converters for mixing baseband signals with radio frequencies and for separating the baseband signals from the radio frequency, of antenna amplifiers for amplifying signals directed to the antennae, and A/D and D/A converters for digitising the signals received over the radio path and for converting the digital signals transmitted to the radio path into analogue signals. In addition, the transceiver unit 208 comprises a digital signal processor, in which it is possible to carry out antenna signal processing, such as signal weighting.

The input lines of the transceiver unit 208 of the base station 204 communicate each with one antenna 236 and 238, which implement a radio link 216 to the terminal device 202. The structure of frames to be transmitted on the radio link 216 is defined system-specifically, and it is called an air interface Uu. The antennae 236 and 238 constitute a pair of antennae, which are typically in mutual cross polarization, whereby the electric field components of the electromagnetic waves transmitted from the separate antennae 236, 238 are perpendicular to one another. The transceiver 208 can direct a separate signal to each antenna 236, 238, and by means of the mutual phase and strength of these signals it is possible to modify the polarization of the signal cogenerated by the antenna pair 236, 238 in a desired manner. Correspondingly, a radio signal directed to the antenna pair 236, 238 can be detected in the transceiver 208 with a desired phase and amplitude, which allows the polarization of the antenna pair 236, 238 to be controlled with respect to the signal directed to the antenna pair 236, 238.

Figure 3 shows the structure of the terminal device 202 as a block diagram. The terminal device 202 consists of a user interface 370 Ul, a source codec 360 SC, a baseband part 350 BB, a transceiver 330, an antenna 322 and a control unit 380.

The user interface 370 of the terminal device 202 comprises e.g. a terminal keypad and audiovisual means, such as a display, microphones and earpieces. The source codec 360 performs source coding and digital signal processing.

The baseband part 350 comprises signal processors and necessary memory means for processing the signals to be transmitted to and received from the transceiver 330. The baseband part 350 performs digital transmitter and receiver filtering of the terminal device 202. In addition, in the baseband part 350 the transmitted signal is spread by a spreading code and the received signal is despread.

The transceiver 330 converts the received radio frequency signal to a baseband signal and the transmitted baseband signal to a radio frequency signal. In addition, the transceiver 330 comprises amplifiers, by which the signals transmitted from the antennae 322 and received by the antennae 322 are amplified and optionally phased according to the control commands given by the control unit 380. The signal amplification and phasing take place in the transceiver analogically. The transceiver 330 also comprises duplex filters, by which the transmitted and the received signals are separated.

The control unit 380 controls the operations of the transceiver 330, the baseband part 350 and the source codec 360. The control unit 380 comprises a processor and memory means, by which it is possible to perform processes programmed in the control unit, such as computing operations.

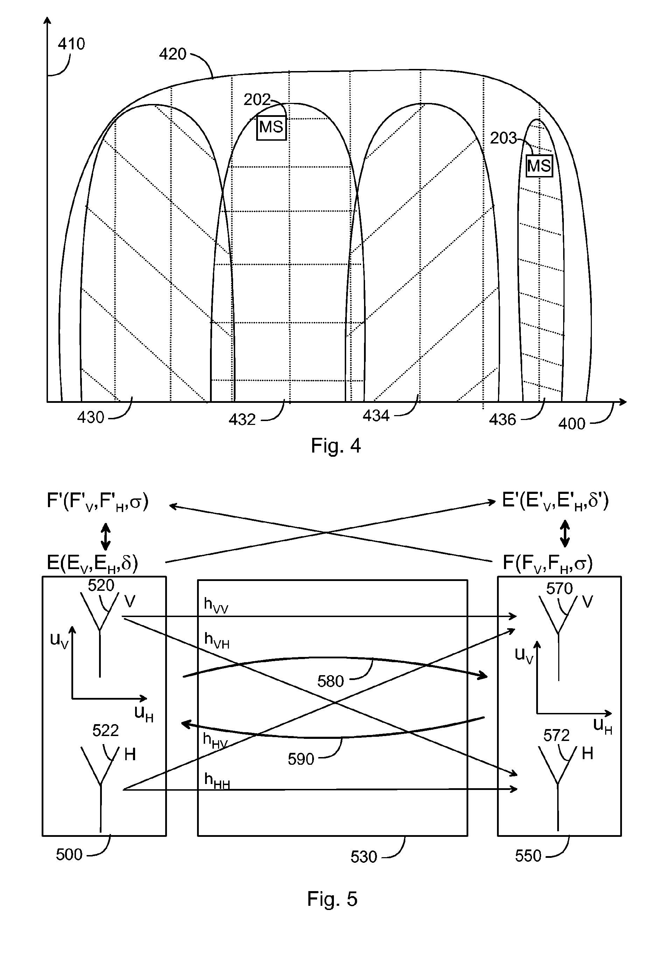

With reference to Figure 4, let us study pilots used in a radio system. A pilot is commonly known as a radio-system-standard signal, which is pre-known by the transmitter and the receiver, and on the basis of which the receiver can form a channel estimate of a radio channel. Figure 4 shows radiation patterns 420, 430, 432, 434, 436, at least two of which have previously known polarisations that differ from one another, and the polarization associated with each of the patterns is indicated symbolically by different line patterns. It is possible to transmit a pilot to at least two radiation patterns 420, 430, 432, 434, 436 of Figure 4, whereby said pilots are associated with the polarization of said radiation pattern. Thus, the radio system employs at least two pilots, of which each one is polarized by a pre-known polarization that differs from the other ones. The radiation patterns 420, 430, 432, 434, 436 shown in Figure 4 may overlap partly or completely. In Figure 4, the horizontal axis 400 represents the azimuth angle of the antenna beam structure in the base station 204 and the vertical axis 410 represents the antenna amplification provided by the base station antennae. Figure 4 also shows the terminal devices 202, 203 located in the cell area of the base station.

In one embodiment the pilot is a cell-specific pilot, and the pilot is transmitted to a radiation pattern, similar to the radiation pattern 420, and the pilot may comprise, in addition to a primary spreading code, a fixed channel code that is common to the terminals 202, 203 within the cell area. The size of a cell or a sector is typically determined by means of the cell-specific pilot, and this includes operations, such as cell selection of the receivers and handover of the terminal device 202, 203. The cell-specific pilot also synchronizes the radio channel, for instance, by sliding the decoding codes used by the receivers 202, 203. In one embodiment the cell-specific pilot is polarized as neutrally as possible, for instance, with any basic polarization, which ensures the best possible coverage of the pilot within the cell area.

In a second embodiment the pilot is beam-specific, whereby each pilot is transmitted to its own radiation pattern 430, 432, 434. The beam-specific pilot is typically also coded with channel codes, in addition to the spreading codes, and more than one terminal device 202, 203 can use it. The beam-specific pilot can be used in the terminal device 202, 203 for channel estimation, for instance. In one embodiment, a beam-specific pilot is transmitted to each radiation pattern 430, 432, 434 of Figure 4, and the terminal device 202 can be commanded to use the pilot having the most favourable polarization. The pilot selection can be based, for instance, on the polarization estimate that the base station 204 has formed on the basis of the signal transmitted by the terminal device 202. The polarizations of the beam-specific pilots differ from one another and they are predetermined. The number and directions of the polarizations are selected such that the available polarizations cover as well as possible the different polarization directions. Thus, for instance, if the radiation patterns 430, 432, 434 of the beam-specific pilots are linearly polarized, the polarization angle of the radiation pattern 430 of the beam-specific pilot can be 45 degrees from the horizontal plane, the radiation pattern 432 can be horizontally polarized and the polarization angle of the radiation pattern 434 can be 135 degrees from the horizontal plane. In addition, the beam-specific pilots are transmitted with a polarization different from that of the cell-specific pilots. Hence, the radiation pattern 420 associated with the cell-specific pilot can be horizontally polarized, for instance.

With reference to Figure 4, the disclosed solution can also be applied in a situation, where the polarization of the radiation pattern of the base station 203, and possibly the direction of the radiation pattern, can be changed on a continuous basis, and thus the available polarization directions are not limited to the predetermined polarizations. The radiation pattern 436 of Figure 4 represents a user-specific radiation pattern, whereby the signal can be transmitted dynamically polarized according to the needs of the terminal device 203. Thus, the channel estimation of the terminal device 203 can be performed from a cell-specific pilot or a dedicated pilot, which is typically transmitted time-divisionally among the data destined to each user separately. If the transmitted dedicated signal has been modified, for instance, by weighting, the dedicated pilot and the cell-specific pilot experience a different channel each, which poses a problem that the quality of the channel estimate formed from the cell-specific pilot 420 is poor. On the other hand, the channel estimation of the dedicated pilot is often of poor quality as well, because the total strength of the dedicated pilot is generally lower than that of the cell-specific pilot. This problem impairs the performance of the radio system. To avoid the problem, it is necessary to determine the criteria, on the basis of which the terminal device 203 forms a channel estimate either from a cell-specific pilot or from a dedicated pilot. In one embodiment the terminal device 203 transmits a signal to the base station 204, which determines a polarization estimate of the received signal, from which estimate, in turn, is determined a quality value of the polarization adaptation. On the basis of the quality value the terminal device is classified into "poor ones" or "others". The terminal devices 203 classified as "others" are commanded to use a cell-specific pilot. The terminal devices 203 classified as "poor ones" are commanded to use a dedicated pilot, whereby the polarization of the signal transmitted to the terminal device 203 by the base station 204 is subjected to polarization control. In the polarization control, the polarization of the base station 204 is adapted to correspond to the polarization of the terminal device 203. The classes are determined on the basis of a threshold value of the polarization adaptation, and the threshold value can be determined such, for instance, that the performance of the terminal devices 203 classified as "poor ones" increases more, thanks to the polarization control, than what would be a decrease in performance if the cell-specific pilot were used for the channel estimation without the polarization control. The velocity of the terminal device 203 and the time diversity of the channel, for instance, can affect the threshold value.

An example of the above-described pilot system is the UTRAN pilot system, in which a primary pilot (P-CPICH, Primary Common Pilot Channel) corresponds to the cell-specific pilot, which is transmitted to the whole cell area, a secondary pilot (S-CPICH, Secondary Common Pilot Channel) corresponds to the beam-specific pilot, which can be transmitted only to a portion of the cell area, when necessary. The third pilot type comprises dedicated pilots, which are transmitted time-divisionally among the data destined to each user separately. The pilot signal can be transmitted continuously, as is done with the primary and secondary pilots of the UTRAN system, or time-divisionally at given intervals, as is done with the dedicated pilots of the UTRAN system.

The disclosed solution enables polarization adaptation, in which the polarizations of the base station 204 and the terminal device 202 can be adapted such that the polarization of the signal arriving in the terminal device is favourable to the terminal device 202. The solution is based on the idea that the terminal device 202 is commanded, by means of signal measurements carried out by the base station 204 or the terminal device 202 itself, to use a favourably polarized pilot. In a case, in which the base station 204 determines the pilot to be used, the base station 204 must transmit to the terminal device 202 a command to change the pilot, which can be implemented using known control channels. In one preferred embodiment the pilot polarization is selected to be the polarization of the traffic channel using the selected pilot as phase reference.

With reference to Figure 5 and the pilots shown in Figure 4, the polarization of signals between the transceivers of the radio system and the determination of the polarization are studied on a general level. Figure 5 shows a first transceiver 500, a radio path 530 and a second transceiver 550. The signal 580 is directed from the transceiver 500 to the transceiver 550 and the signal 590 is directed from the transceiver 550 to the transceiver 500. With reference to Figures 1, 2, 3 and 4, the first transceiver 500 is located in the base station 204, for instance, and the second transceiver 550 is located in the terminal device 202, 203. Further, with reference to the known radio systems, such as UTRAN, GERAN and CDMA2000, the signal 580 is one of the above-mentioned pilots and the signal 590 is any signal transmitted by the terminal device 550 and receivable by the base station 204. In the disclosed solution, the transceiver 500 comprises an antenna array, such as an antenna pair 520, 522, which can be arranged to transmit, and optionally to receive, a signal polarized in a given manner. The antennae 520 and 522 of the antenna pair 520, 522 correspond to the antennae 236 and 238 of Figure 1. The transceiver 550, in turn, comprises an antenna array, which allows transmission and reception of the signal 580, 590 having a polarization that is not necessarily controllable, but remains constant or approximately constant in the time scale observed. The time scale is determined, for instance, such that the polarization of the transceiver 550 remains unchanged for 100 milliseconds. The antenna array of the transceiver 550 is presented by means of an antenna pair 570, 572, however, for easy understanding of the description. The antenna pair 570, 572 corresponds to the antenna 322 of the terminal device 202 shown in Figure 3. In one embodiment, the second transceiver 550 comprises an antenna array for transmitting and receiving orthogonally polarized signals, whereby the transceiver antennae 570, 572 are cross-polarized, for instance. The radio path 530 consists of the physical environment in the vicinity of the transceivers 500, 550, which may cause absorption, delay, reflection and echo in the signals between the transceivers 500, 550, and each of these effects may be polarization-dependent.

Further, with reference to Figure 5, let us study the embodiments of the disclosed solution. In one embodiment of the disclosed solution, the second transceiver 550 transmits a signal 590 that is received by the first transceiver 500. Thereafter, the first transceiver 500 determines a polarization estimate of the received signal 590, and the pilot 580 to be used is selected from two pilots that are polarized with a pre-known polarization that differs from the other ones on the basis of the determined polarization estimate. Thereafter, the first transceiver 500 may command the second transceiver 550 to use the selected pilot 580 for channel estimation by using prior art control channels. As the polarization estimate is formed, it is possible to take into account a temporal change in the polarization of the signal 590 on the basis of successive signal 590 measurements, and optionally predict the polarization of the pilot 580 at the transmission moment.

In another embodiment, the first transceiver 500 transmits at least two pilots 580, of which each one is polarized with a pre-known polarization that differs from the other ones, and said pilots 580 are received by the second transceiver 550. Thereafter, the second transceiver 580 determines a polarization estimate for each pilot 580 and the pilot 580 to be used is selected in the second transceiver 550 from the at least two pilots that are polarized with the pre-known polarization that differs from the other ones on the basis of the determined polarization estimate.

The above-mentioned polarization estimate is a variable that comprises information on the polarization of the received signal with respect to the polarization of the receiver. In a broad sense, the polarization estimate is a set of variables formed from the received signal, and the value of at least one variable in the set of variables depends on the polarization of the received signal.

In the following, let us study the polarization of an electromagnetic wave in theory, the formation of polarization estimates and the principle of polarization adaptation. The signals 580 and 590 between the transceivers 500 and 550 comprise an electromagnetic field, whose polarization is determined as a direction of an electric field component of the electromagnetic field. In this connection it is assumed that the information contents of the signals 580, 590 do not substantially change on the radio path 530, but the strengths and polarizations of the signals 580, 590 may change. In a general case, the polarization of the signal 580, 590 in a fixed observation point, such as on the surface of the antenna 520, 522, 570, 572, can be presented by means of an in-plane vibrating electric field vector E, for instance as follows:

$$E(E_V, E_H, \delta, \omega) = (u_V E_V + u_H E_H e^{j\delta})e^{j\omega t}. \tag{1}$$

In the equation (1) $E_V$ and $E_H$ are the magnitudes of the electric field components of the electromagnetic field, $\mathbf{u}_V$ and $\mathbf{u}_H$ are the orthogonal basis vectors of the coordinates to be observed, $\delta$ is the phase difference between the components of $\mathbf{E}$ in the direction of the vectors $\mathbf{u}_V$ and $\mathbf{u}_H$, $\omega$ is the angular frequency of the electromagnetic field and j is an imaginary unit. In this connection the angular frequency $\omega$ is not noted in the expression, because it is assumed to have only a slight effect on the polarization. The directions $\mathbf{u}_V$ and $\mathbf{u}_H$ are the basic polarization directions. The variables $E_V$, $E_H$ and $\sigma$ can also be called polarization parameters, because they define the polarization of the signal. The subscript V refers to the vertical and the subscript H to the horizontal directions, which can be determined from the globe reference, for instance. The equation (1) represents a polarization ellipse drawn by the vector $\mathbf{E}$ as a function of time t in a plane located in a fixed observation point, such as a transmission antenna or a reception antenna. A special case of the polarization ellipse is a situation, in which the phase difference $\delta$ is a multiple of 180 degrees. Thus, the polarization ellipse will reduce to a straight line in the polarization plane, whose slope is dependent on the mutual magnitudes of the electric field components $E_V$ and $E_H$.

With reference to Figure 5 and the formula (1), let us next study a situation, in which the transceiver 500 serves as a transmitter and the second transceiver 550 serves as a receiver. In the transmitter 500, the signal 580 is polarized in accordance with the equation (1): $\mathbf{E}(E_V,E_H,\delta)$. On arriving in the antenna 570, 572 of the receiver 550 the polarization $\mathbf{E}$ of the signal 580 has been modified by the effect of a polarization response of the radio path 530 into the polarization $\mathbf{E}'(E'_V,E'_H,\delta')$. For instance, in that case the vertical component $\mathbf{E}_V$ of the signal 580 $\mathbf{E}(E_V,E_H,\delta)$ is absorbed in the environment more intensely than the horizontal component $\mathbf{E}_H$, whereby the signal 580 arriving in the receiver 550 mainly comprises a horizontal polarization $\mathbf{E}'_H$. The receiver 550 is arranged to receive the signal 580 with the polarization $\mathbf{F}(F_V, F_H,\sigma)$ according to the equation (1). In that case, the polarization $\mathbf{F}$ of the receiver 550 does not necessarily correspond to the polarization $\mathbf{E}'$ of the signal 580 arriving in the receiver 550, whereby it is necessary to perform polarization adaptation, by which the polarizations of either the transmitter 500 or the receiver 550, or optionally of both, are to be adapted such that the polarization of the signal arriving in the receiver 550 and the polarization of the receiver 550 have a desired relation to one another. In one embodiment, the polarization $\mathbf{E}'$ of the signal arriving in the receiver 550 and the polarization $\mathbf{F}$ of the receiver 580 are as similar as possible, which allows the polarization adaptation to minimize the effects of the radio path, and possibly of the mutual position of the transceivers 500, 550 on the signal to be detected.

Next, let us study the mathematical notation of the polarization adaptation and apply it to the above-described situation. The compatibility of the polarization $\mathbf{F}(F_V, F_H,\sigma)$ of the receiver 550 with the signal 580 polarized with the polarization $\mathbf{E}'(E'_V,E'_H,\delta')$ can be presented using a polarization adaptation parameter L, which in turn can be presented by means of vectors $\mathbf{E}'$ and $\mathbf{F}$ in the following form:

$$L = \frac{\left|\mathbf{E}'\cdot\mathbf{F}^*\right|}{\left\|\mathbf{E}\right\|\left\|\mathbf{F}\right\|} = \frac{\left|E'_V\,F_V + E'_H\,F_H\,e^{j(\delta-\sigma)}\right|}{\sqrt{\left(E'^2_V + E'^2_H\right)\left(F^2_V + F^2_H\right)}}, \tag{2}$$

where $\mathbf{F}^*$ is a complex conjugate of the vector $\mathbf{F}$, $|\mathbf{E}'|$ is the absolute value of the vector $\mathbf{E}'$ and $|\mathbf{F}|$ is the absolute value of the vector $\mathbf{F}$. The formula (2) is one mathematical notation, which represents the mutual compatibility of signals polarized in two different manners. According to the formula (2), the polarization adaptation parameter L will have the maximum value, for instance, when the polarization parameters $F_V$, $F_H$ and $\sigma$ of the receiver 550 are selected, for instance, as follows: $F_V = E'_V$, $F_H = E'_H$ and $\sigma = \delta$. However, the selection of the polarization parameters of the receiver 550 requires an antenna array, by which the receiver polarization can be adjusted.

With reference to the formula (2) and Figure 5, the polarization adaptation can also be performed by changing the polarization $\mathbf{E}(E_V,E_H,\delta)$ of the transmitter 500 while the polarization $\mathbf{F}(F_V, F_{H,\sigma})$ of the receiver 550 remains substantially unchanged. In that case the polarization $\mathbf{E}(E_V,E_H,\delta)$ of the transmitter 500 is modified such that the post-radiopath polarization $\mathbf{E}'(E'_V,E'_H,\delta')$ of the signal 580 is compatible with the polarization $\mathbf{F}(F_V,F_H,\sigma)$ of the receiver 550. Hence, the transmitter 500 has to estimate in one way or another the polarization of the transmitted signal 580 so as to implement the polarization adaptation. Adaptation of the polarization $\mathbf{E}$ of the transmitter 500 to the polarization $\mathbf{F}$ of the receiver 550 can be based, for instance, on the signal 590 transmitted by the receiver 550, which signal is received in the transmitter 500, and from which a polarization estimate is formed. The receiver 550 transmits the signal 590 with the polarization $\mathbf{F}$, which by the effect of the polarization response of the radio path 530 is modified into the polarization $\mathbf{F}'$. The transmitter 500 carries out polarization $\mathbf{F}'$ measurement, which comprises determination of at least one polarization parameter $F_V$, $F_H$ or $\sigma$, for instance, by measuring power coming to the antennae 520, 522. Thus, the polarization estimate is at least one of the following parameters: $F_V$, $F_H$, $\sigma$. On the basis of the determined polarization parameters, the transmitter 500 determines the polarization of the signal 580. In one embodiment, the transmitter 500 sets the parameters of its transmission polarization, for instance, as follows: $E_V = F'_V$, $E_H = F'_H$, $\delta = \sigma$. The signal 580

polarized with these parameters is transmitted to the receiver 550. The above-described embodiment is based on the invariance of the radio path 530 as the propagation direction of an electromagnetic wave is inverted. In the above it is assumed that, for instance, in the FDD (Frequency Division Duplex) system the differences in downlink and uplink frequencies do not have a significant effect on the polarization response of the radio path 530.

Further, with reference to Figure 5, let us study the use and formation of polarized pilots. In one embodiment the transceiver 550 transmits to the antenna pair 520, 522 a polarized signal 590, which can be expressed as $\mathbf{r} = x_H \mathbf{u}_H + x_V \boldsymbol{u}_H$, where $x_H$ is a signal component of a horizontal antenna 522 and $x_V$ is a signal component of a vertical antenna 520. The receiver polarization of the antenna pair 520, 522 of the transceiver 550 is $\mathbf{u}_i$, whereby the received signal $y_i$ will have the form $y_i = \mathbf{u}_i \mathbf{r} = x_H \mathbf{u}_i \, \mathbf{u}_H + x_V \, \mathbf{u}_i \, \mathbf{u}_V$ in one embodiment the transceiver 500 is configured to have a predetermined set of transmission weights $\mathbf{u}_i$, with which the signal is transmitted and possibly also received. The polarization $\mathbf{u}_i$ can be expressed as $\mathbf{u}_i = c_{iH} \mathbf{u}_H + c_{iV} \mathbf{u}_V$, where coefficients $c_{iH}$ and $c_{iV}$ are complex numbers. In addition, the polarizations $\mathbf{u}_i$ can be fixed in advance. Let the number of different, possible polarizations $\mathbf{u}_i$ be K. Then, the polarization set of signals transmitted, and possibly also received, by the transceiver 500 can be advantageously represented by a polarization matrix PM having the form of

$$PM = \begin{pmatrix} \mathbf{u}_1 \cdot \mathbf{u}_H & \mathbf{u}_1 \cdot \mathbf{u}_V \\ \mathbf{u}_2 \cdot \mathbf{u}_H & \mathbf{u}_2 \cdot \mathbf{u}_V \\ \vdots & \vdots \\ \mathbf{u}_K \cdot \mathbf{u}_H & \mathbf{u}_K \cdot \mathbf{u}_V \end{pmatrix}, \quad (3)$$

and forming a relation between the signal $\mathbf{x} = (x_V, x_H)^T$ arriving in the antenna pair 520, 522 and the projection vector $\mathbf{y} = (y_1, y_2, y_k)^T$ as follows:

$$y = PM \cdot x. \quad (4)$$

The superscript T refers to a transpose of a vector or a matrix. Each projection vector $\mathbf{y}$ component $y_i$ corresponds to a signal received with a different polarization $\mathbf{u}_i$, the quality of which signal depends on the polarization adaptation of the polarization $\mathbf{u}_i$ with respect to the signal 590 arriving in the antenna pair 520, 522. Thus, the polarization matrix (3) can be used for analysing the signal 590 received by the transceiver 500 and for implementing the polarization adaptation of the signal 580 transmitted from the transceiver 500. The polarization matrix of an individual link can be formed, for instance, in the digital signal processor of the transceiver 204. In one embodiment the polarization adaptation of the signal 580 transmitted from the transceiver 500 to the transceiver 550 is implemented such that the transmitter 550 transmits a signal 590. The transceiver 500 receives the signal 590 and generates a polarization matrix according to the formula (3), by means of which are determined projection vector components $y_i$. Thereafter, the transceiver 500 selects the best projection vector component yi on the basis of the estimated received power or the noise level. These decision variables can be estimated, for instance, by filtering the received signal in accordance with prior art methods. In one embodiment the pilot 580 from the transceiver 500 is transmitted to the transceiver 550 with the above-determined polarization $\mathbf{u}_i$, whereby the transceiver 550 can form a channel estimate from the pilot 580.

In another embodiment, the transceiver 500 transmits a series of signals 580 polarized with the polarizations $\mathbf{u}_i$ according to the polarization matrix (3), which are received by the receiver 550. In one embodiment, the signals 580 are pilots. The transceiver 500 determines the strength of the signal transmitted with each polarization $\mathbf{u}_i$, which in this case serves as a polarization estimate. The polarization estimates corresponding to each received signal are compared with one another, on the basis of which the polarization that is most advantageous on reception will be selected. It is possible to compare the polarization estimates by also comparing variables representing the signal quality, such as SIR (Signal to Interference Ratio) estimates. After the selection of the most advantageous polarization the transceiver 550 changes over to use the most advantageously polarized pilot. In addition to this, the transceiver 550 may transmit to the transceiver 500 a message on the desired polarization using logic channel structures of the WCDMA standard, for instance, or any other return channel reserved for the purpose. The above-described formation of a polarization estimate can be performed using the baseband part 350 of the terminal device 202 and the control unit 380, for instance.

With reference to Figure 5, the propagation of the signal 580, 590 between the transceiver pair 500, 550 can also be presented by means of a two-dimensional polarization channel model, which also takes into account fading and distortion of a channel in the typical mobile telecommunication environment. In that case, the transmitter 500 transmits a symbol s, which is received as a signal r in the transceiver 550. The signal **r** can be expresses in the form of

$$r = hs + n, \tag{5}$$

where a signal vector consists of signal components $r_i$, a channel vector **h** consists of complex channel coefficients $h_i$ and a noise and interference vector n consists of complex noise and interference terms as follows:

$$r = (r_1, r_2, ..., r_L)^T \tag{6}$$

$$h = (h_1, h_2, ..., h_L)^T \tag{7}$$

$$n = (n_1, n_2, ..., n_L)^T. \tag{8}$$

The index L is the number of channel paths. The channel paths represent the multipath propagation of the signal, which causes phase shifts, changes in strength and delay in the signal, for instance. Let us assume that the transceiver 500 acts as a transmitter and the transceiver 550 acts as a receiver, whose antenna polarization direction is **u**. Because the polarization direction **u** is a projection of a polarization plane spanned by the orthogonal vectors, the antennae 570, 572 of Figure 5 may be considered as virtual antennae spanning orthogonal polarizations. Thus, the polarization channel **h** seen by the receiver 550 is obtained as a projection

$$h = (H_V u_V + H_H u_H) \cdot u^*, \tag{9}$$

where **u**\* is a complex conjugate of the vector **u**, and where

$$H_V = w_V h_{VV} + w_H h_{HV} \tag{10}$$

$$H_H = w_H h_{HH} + w_V h_{VH}, \tag{11}$$

where $w_V$ and $w_H$ are complex weights used in different antenna branches 236, 238 by the transceiver 500; and where $\mathbf{h}_{VV}$ is a signal portion transmitted with vertical polarization and arriving with horizontal polarization in the receiver; $\mathbf{h}_{HH}$ is a signal portion transmitted with horizontal polarization and arriving with horizontal polarization in the receiver; $\mathbf{h}_{HV}$ is a signal portion transmitted with horizontal polarization and arriving with vertical polarization in the receiver; $h_{VH}$ is a signal portion transmitted with vertical polarization and arriving with horizontal polarization in the receiver. The parameters $\mathbf{h}_{VV}$, $\mathbf{h}_{HH}$, $\mathbf{h}_{HV}$ and $\mathbf{h}_{VH}$ are vectors, whose components are complex channel taps. For instance, in the channel estimation the receiver estimates the channel taps of the vector **h**, from which a polarization estimate is formed. In one embodiment the transceiver 500 transmits pilots 580 with different polarizations, which can be formed, for instance, by selecting the weights ($w_V$, $w_H$) such that one pilot 580 is transmitted with each transmission weight pair. Because the pilots are transmitted with orthogonal channelling codes, the transceiver 550 is able to estimate the pilots transmitted with different polarizations separately and to select therefrom the one that gives the best result in view of reception. Thereafter, the transceiver 550 informs the best suited polarization, or the corresponding pilot number, to the transceiver 500, which transmits the user-specific information destined to the transceiver 550 by using transmission weights forming the polarization selected by the transceiver 550. In another embodiment, the transceiver 500 estimates from the received signal 590 the polarization used by the transceiver 550 and selects from a predetermined transmission weight set the transmission weights that form the best compatible polarization for downlink transmission. The above-described channel estimation can be performed in the control unit 380 of the terminal device 202, for instance.

Even though the invention is described above with reference to the example of the attached drawings, it is apparent that the invention is not restricted thereto, but it can be modified in a variety of ways within the scope of the inventive idea disclosed in the attached claims.

**Claims**

1. A method for using pilots in a radio system, in which method a first transceiver (500) transmits pilots (580) that are received by a second transceiver (550), **characterized by**
the radio system employing at least two pilots (580), each polarized by a pre-known polarization that differs from the other ones;
transmitting and receiving at least one signal between the first transceiver (500) and the second transceiver (550);
determining a polarization estimate of said signal; and
selecting a pilot (580) to be employed from the at least two pilots polarized by the pre-known polarization that differs from the other ones on the basis of the determined polarization estimate.

2. The method of claim 1, **characterized by**
commanding the second transceiver (550) to employ the selected pilot (580); and
employing the selected pilot (580).

3. The method of claim 1,**characterized by**
transmitting said signal from the second transceiver (550) and receiving it by the first transceiver (500);
determining said polarization estimate in the first transceiver (500); and
selecting said pilot (580) in the first transceiver (500).

4. The method of claim 3, **characterized by**
commanding in the first transceiver (500) the second transceiver (550) to employ the selected pilot (580); and
employing the selected pilot (580).

5. The method of claim 1, **characterized by**
transmitting and receiving at least one signal between the first transceiver (500) and the second transceiver (550) such that the first transceiver (500) transmits at least two pilots (580), of which each one is polarized by a pre-known polarization that differs from the other ones, and which are received in the second transceiver (550);
determining in the second transceiver (550) a polarization estimate for each received pilot (580); and
selecting said pilot (580) in the second transceiver (550).

6. The method of claim 5, **characterized by**
commanding the second transceiver (550) to employ the selected pilot (580); and
employing the selected pilot (580).

7. The method of claim 1,**characterized in that**
the radio system pilots are transmitted on the following common pilot channels of the WCDMA radio system: a primary pilot channel (P-PCIPH), a secondary pilot channel (S-PCICH).

8. The method of claim 1, **characterized by**
selecting the polarization of the pilot (580) to be the polarization of a traffic channel using the selected pilot (580) as its phase reference.

9. A radio system comprising
a first transceiver (500) for transmitting pilots (580); and
a second transceiver (550) for receiving pilots (580), **characterized by**
employing at least two pilots (580) between the first transceiver (500) and the second transceiver (550), each of the pilots being polarized by a pre-known polarization that differs from the other ones;
transmitting and receiving at least one signal between the first transceiver (500) and the second transceiver (550);
the receiving transceiver being arranged to determine a polarization estimate of said signal; and
the radio system being arranged to select a pilot (580) to be employed from the at least two pilots polarized by the pre-known polarization that differs from the other ones on the basis of the determined polarization estimate.

10. The radio system of claim 9, **characterized in that**
the radio system is arranged to command the second transceiver (550) to employ the selected pilot (580); and
the radio system is arranged to employ the selected pilot (580).

**11.** The radio system of claim 9, **characterized in that**

the second transceiver (550) is arranged to transmit said signal and the first transceiver (500) is arranged to receive said signal;

the first transceiver (500) is arranged to determine said polarization estimate; and

the first transceiver (500) is arranged to select said pilot (580).

**12.** The radio system of claim 11,**characterized in that**

the first transceiver (500) is arranged to command the second transceiver (550) to employ the selected pilot (580); and

the radio system is arranged to employ the selected pilot (580).

**13.** The radio system of claim 9, **characterized in that**

the radio system is arranged to transmit and receive at least one signal between the first transceiver (500) and the second transceiver (550) such that the first transceiver (500) is arranged to transmit at least two pilots (580), of which each one is polarized by a pre-known polarization that differs from the other ones, and the second transceiver (550) is arranged to receive said pilots (580);

the second transceiver (550) is arranged to determine a polarization estimate for each received pilot (580); and

the second transceiver (550) is arranged to select said pilot (580).

**14.** The radio system of claim 13, **characterized in that**

the second transceiver (550) is arranged to employ the selected pilot (580).

**15.** The radio system of claim 9, **characterized in that**

the radio system is arranged to transmit the pilots on the following common pilot channels of the WCDMA radio system: a primary pilot channel (P-CPICH), a secondary pilot channel (S-CPICH).

**16.** The radio system of claim 9, **characterized in that**

the radio system is arranged to select the polarization of the pilot (580) to be the polarization of a traffic channel using the selected pilot (580) as its phase reference.

Fig. 1

Fig. 2

Fig. 3

Fig. 4

Fig. 5